Europäisches Patentamt

(19) European Patent Office

Office européen des brevets

(11) Numéro de publication: **0 171 483 B1**

(12) **FASCICULE DE BREVET EUROPEEN**

(45) Date de publication de fascicule du brevet:
**29.01.92**

(21) Numéro de dépôt: **84810507.8**

(22) Date de dépôt: **17.10.84**

(51) Int. Cl.⁵: **H02K 3/04**, H02K 23/54,
H02K 21/24, H02K 37/12,
H02K 41/035, H02K 7/20

(54) **Transducteur électromécanique.**

(30) Priorité: **10.08.84 CH 3852/84**

(43) Date de publication de la demande:
**19.02.86 Bulletin 86/08**

(45) Mention de la délivrance du brevet:
**29.01.92 Bulletin 92/05**

(84) Etats contractants désignés:
**AT CH DE FR GB IT LI NL SE**

(56) Documents cités:
DE-A- 2 112 708      DE-A- 2 423 665
DE-A- 2 532 574      DE-B- 1 188 709
US-A- 3 319 101      US-A- 3 505 544
US-A- 3 858 071

(73) Titulaire: **Asgalium S.A.**
**Avenue Léopold-Robert 73a**
**CH-2300 La Chaux-de-Fonds(CH)**

(72) Inventeur: **Heyraud, Marc, Dr.**
**Recorne 24b**
**CH-2300 LA Chaux-de-Fonds(CH)**

(74) Mandataire: **Rochat, Daniel Jean et al**
**Bovard SA Ingénieurs-Conseils ACP Optin-**
**genstrasse 16**
**CH-3000 Bern 25(CH)**

## Description

On sait que le développement des systèmes électroniques de captage, de transmission et de traitement des informations a entraîné depuis vingt ans environ une grande diversification et de nombreux perfectionnements dans le domaine des transducteurs électromécaniques. Ces derniers peuvent être utilisés en régime moteur de manière à convertir l'énergie électrique en énergie mécanique, ou en régime générateur. Dans ce cas, ils convertissent une énergie mécanique en énergie électrique, et fonctionnent alors le plus souvent en capteurs.

Dans la plupart des cas, les bobinages de ces transducteurs sont parcourus par des impulsions de courant, dont la forme est en général rectangulaire, ce qui entraîne dans les constructions connues jusqu'à maintenant l'apparition de régimes transitoires au début et à la fin des impulsions. En effet, par suite de l'inductance propre des bobines lors de l'enclenchement d'une impulsion de forme rectangulaire, le courant n'atteint pas instantanément dans la bobine une valeur correspondant au rapport entre la tension et la résistance, et on s'est aperçu que, dans certains cas, notamment lorsque les impulsions sont de très courte durée et qu'il est désirable qu'elles puissent se succéder à fréquence élevée, il était avantageux de se donner pour objectif de réduire les effets de l'inductance.

Ainsi, l'inductance est la cause principale d'usure des collecteurs et des balais dans les moteurs à courant continu. Dans le cas des moteurs pas à pas, elle constitue une limite aux performances dynamiques de ces moteurs, et on est obligé d'alimenter les bobines "en avance" par par rapport à la position angulaire réelle du rotor, ou à utiliser des alimentations à haute tension dites "à courant constant" ce qui complique et renchérit l'électronique de commande.

La présente invention se propose d'améliorer la construction des transducteurs électromécaniques par un agencement des bobines permettant de diminuer l'importance des phénomènes transitoires au moment de l'apparition des impulsions.

On connaît déjà, par le brevet américain US-3 505 544, un agencement de moteur linéaire dans lequel la partie mobile du moteur comporte une bobine, formée elle-même de deux parties. Ces deux parties sont agencées de manière que les effets de l'inductance mutuelle, tels qu'ils se manifestent dans chaque partie lors d'une même variation du courant, soient inversés les uns par rapport aux autres. Cet agencement a pour conséquence que, lors de l'enclenchement du courant, la mise en vitesse de l'élément mobile du moteur est accélérée. Toutefois, l'enseignement donné par ce brevet consiste à prévoir des moyens qui s'appliquent spécifiquement à un organe mobile, effectuant un déplacement linéaire, sur une distance finie.

Le fascicule de demande exposée DE-2 112 708 décrit également un moteur linéaire qui comporte des bobines placées côte à côte et comportant des parties de bobine parcourues par le courant en sens inverse.

Par ailleurs, les phénomènes d'inductance mutuelle et les lois scientifiques relatives à la création d'une force électro-motrice induite lorsqu'un conducteur se déplace dans un champ magnétique, en coupant les lignes de force, sont connus.

La présente invention s'applique essentiellement à des transducteurs électromécaniques de type rotatif et, plus particulièrement, à des transducteurs électromécaniques de faible puissance fonctionnant sans noyau magnétique.

Dans le but de réaliser l'amélioration indiquée plus haut, l'invention a pour objet un transducteur électromécanique comportant une partie fixe et une partie mobile en rotation par rapport à la partie fixe autour d'un axe central, dont une desdites parties comprend au moins un aimant et l'autre un ensemble de bobines réparties autour dudit axe, caractérisé en ce que les bobines sont agencées en deux parties parcourues simultanément par le courant et comportant chacune deux nappes de conducteurs actifs coopérant avec les champs magnétiques, les deux parties de chaque bobine étant coaxiales et disposées de manière que lors d'une variation du courant les effets de l'inductance mutuelle dans les deux parties de la bobine soient inversés par rapport aux effets de l'inductance propre de chaque partie.

On sait que de façon générale les transducteurs électromécaniques peuvent être répartis en trois types différents: les transducteurs à réluctance variable, les transducteurs de type électrodynamique et les transducteurs de type électromagnétique. Comme on le verra par la suite, le perfectionnement défini ci-dessus est particulièrement efficace dans le cas des transducteurs des types électrodynamique et électromagnétique. En effet, pour ce genre de moteurs, l'inductance apparente du bobinage ne joue pas de rôle direct dans la création du couple aussi longtemps que l'interaction entre bobine et aimant est préservée.

On va décrire ci-après, à titre d'exemple, différentes formes d'exécution du transducteur selon l'invention en se référant au dessin annexé, dans lequel:

les fig. 1 et 2 sont des vues schématiques montrant respectivement le rotor et le stator d'un moteur pas à

pas qui constitue la première forme d'exécution de l'objet de l'invention,

la fig. 3 est une vue en coupe axiale schématique du moteur pas à pas des fig. 1 et 2,

les fig. 4 et 5 sont des vues schématiques représentant respectivement le stator et le bobinage du rotor d'un moteur à collecteur qui constitue la seconde forme d'exécution de l'objet de l'invention,

la fig. 6 est une vue en perspective simplifiée du moteur à collecteur de la seconde forme d'exécution,

les fig. 7 et 8 sont des vues schématiques représentant respectivement le stator et le bobinage du rotor d'un moteur à collecteur semblable au moteur de la fig. 6 représentant une troisième forme d'exécution de l'objet de l'invention, et

les fig. 9 et 10 sont des vues en perspective schématiques et simplifiées qui représentent respectivement des éléments du rotor et du stator d'un dispositif synchrone constituant une quatrième forme d'exécution de l'objet de l'invention.

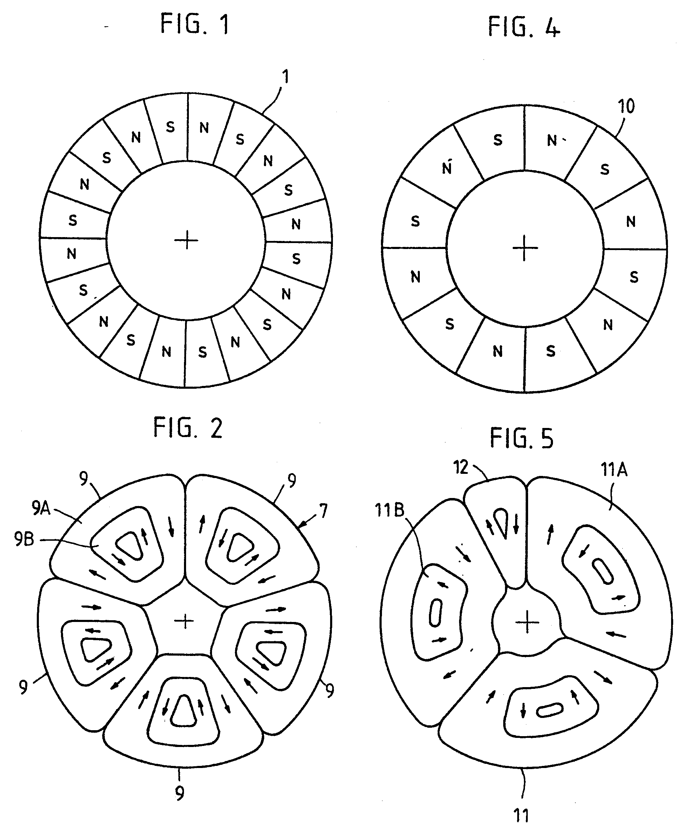

Le moteur pas à pas des fig. 1, 2 et 3 comporte un rotor 1 constitué par un disque en un matériau ferromagnétique comportant dix paires de pôles dont les axes de polarisation sont parallèles à l'axe du corps 1 et sont orientés dans des sens alternés comme on le voit à la fig. 1. Le rotor 1 est monté sur un arbre 2 par des moyens qui ne sont pas représentés en détail, mais qui sont connus en soi. Cet arbre 2 est supporté par deux paliers 3 par rapport à une cage de stator 4 dans laquelle le rotor 1 est enfermé. Cette cage 4 comporte deux flasques 5 et 6 qui peuvent être constitués le cas échéant par des disques en matière isolante portant sur leur surface des pistes conductrices formées par la technique des circuits imprimés. Chacun des flasques 5 et 6 porte un bobinage 7 ou 8, le bobinage 7 étant représenté à la fig. 2.

Le bobinage 7 est constitué de cinq bobines 9 occupant chacune un secteur angulaire de 72° et groupées en une couronne fermée dont le diamètre correspond à celui du rotor 1. Les bobines 9 sans noyau peuvent être fixées par exemple par collage sur les flasques qui les portent et leurs extrémités seront connectées au circuit d'alimentation du stator. Comme on le voit à la fig. 2, chaque bobine 9 est constituée de deux parties différentes 9a et 9b. La partie 9b est constituée par un certain nombre des spires de l'enroulement constituant la bobine 9, ces spires étant disposées à l'intérieur du bobinage, tandis que la partie 9a est constituée par les spires extérieures. De préférence, les deux parties de la bobine 9 seront des ensembles de spires plates. Chaque partie de bobine 9a ou 9b comporte deux nappes de conducteurs actifs disposées radialement, rectilignes, connectées entre elles par des parties de spires qui sont disposées circonférentiellement. Pour distinguer les deux parties de chaque bobine on pourra procéder de la façon suivante: lors de la formation de la bobine, on commencera par enrouler le fil destiné à former la partie 9b, c.à.d. la partie intérieure de la bobine, puis, lorsque le nombre de spires nécessaire aura été effectué, on arrêtera la bobineuse et on la fera repartir en sens inverse. Dans ces conditions, le début et la fin de chaque partie de bobine sera accessible et l'on pourra connecter les deux parties de chaque bobine indépendamment au circuit d'alimentation du moteur en impulsions.

En fait, dans toutes les formes d'exécution qui seront décrites ci-après, les deux parties de chaque bobine seront connectées de façon à être parcourues par le courant simultanément, mais en sens inverse comme le montrent les flèches de la fig. 2. Cela signifie que deux nappes de conducteurs actifs voisines seront parcourues en sens inverse, de sorte que, lors d'une variation du courant par exemple au moment de l'enclenchement ou de l'interruption d'une impulsion, l'inductance mutuelle de chaque partie de bobine sur l'autre agira en sens inverse de l'inductance propre de l'autre partie.

Dans la forme d'exécution représentée aux fig. 1 et 2, chaque nappe de conducteurs actifs occupe un secteur du cercle formé par l'ensemble des bobines 9 qui est égal à 1/20 du total, puisque chacune des cinq bobines est divisée en quatre nappes de conducteurs actifs, et l'espace occupé par chaque nappe est égal à l'espace occupé par un pôle de la couronne d'aimants 1. Ainsi, chaque nappe de conducteurs actifs et chaque pôle de la couronne d'aimants 1 correspondent à un angle de 180° électriques.

Pour le fonctionnement du moteur décrit en moteur pas à pas, il suffira que la couronne des bobines 8 dont la constitution est par ailleurs exactement la même que la couronne des bobines 9, soit décalée angulairement par rapport à cette dernière d'un angle de 90° électriques, c.à.d. d'un angle correspondant à la moitié de la largeur d'une nappe de conducteurs actifs. Dans ces conditions, le rotor avancera d'un pas égal à 90° électriques à chaque impulsion, les impulsions étant distribuées alternativement sur les bobines 9 et sur les bobines 8. Le couple moteur sera dû à l'interaction entre le courant circulant dans les différentes nappes de conducteurs actifs de la couche de bobine qui sera excitée et les champs magnétiques des aimants et on se rend compte que le moteur décrit peut tout aussi bien fonctionner en moteur synchrone si la durée et la fréquence des impulsions correspondent au temps nécessaire lors de chaque impulsion pour que le rotor tourne de 90° électriques. Grâce à la disposition des bobines 8 et 9 telle que représentée à la fig. 2, on peut atteindre avec un moteur donné une vitesse de rotation ou une fréquence des déplacements pas à pas qui sont supérieures à ce que l'on obtiendrait dans les mêmes conditions avec les bobinages connus jusqu'à maintenant.

La forme d'exécution représentée aux fig. 4, 5 et 6 illustre l'application de l'invention au cas d'un moteur à collecteur dans lequel le stator est constitué par une couronne d'aimants 10 et le rotor comporte un ensemble de bobines sans noyau constitué par trois bobines 11 occupant chacune 4/13 de l'agencement total du bobinage, et une bobine auxiliaire 12 occupant 1/13 du dit espace. Quant au stator 10, il comporte dans cette forme d'exécution, six paires d'aimants répartis en une couronne cylindrique, ayant leurs axes de polarisation parallèles à l'axe du cylindre, comme dans la première forme d'exécution, la direction des axes de polarisation étant inversée lorsqu'on passe d'un aimant au suivant. Les différentes bobines 11 sont connectées aux lamelles 13 d'un collecteur qui est solidaire du rotor et qui coopère avec deux balais fixes 14 et 15 connectés à l'alimentation en courant. De plus, deux bagues 16 sont connectées chacune à une extrémité de l'enroulement de la bobine 12 et coopèrent avec des balais auxiliaires 17. On notera encore que chaque bobine 11 est constituée comme les bobines 8 et 9 de deux parties 11a et 11b dont la partie 11b et formée par les spires intérieures de la bobine, tandis que la partie 11a est formée par les spires extérieures. Le nombre de spires de chaque partie sera déterminé de façon que chaque nappe de conducteurs actifs occupe un secteur angulaire ayant une ouverture d'environ 1/13 de l'arc complet du rotor. D'autre part, alors que le moteur pas à pas des fig. 1 à 3 fonctionnait en régime bi-phasé, le moteur à collecteur, à courant continu, des fig. 4,5, et 6 fonctionne en régime tri-phasé, chacune des bobines 11 étant alimentée successivement par la connection des balais 14 et 15 aux lamelles 13 convenables, afin que l'on ait le nombre de commutations voulu par tour. Les deux parties 11a et 11b de chaque bobine 11 seront alimentées en même temps par des courants circulant en sens inverse à raison de 36 commutations par tour.

Dans le cas de l'utilisation du dispositif des fig. 4 à 6 comme moteur à courant continu, l'enroulement 12 pourra servir de générateur d'un signal de rotation permettant soit de compter le nombre de tours du moteur, soit de détecter sa vitesse de rotation. En effet, le passage de l'enroulement devant les pôles alternés de la couronne d'aimants 10 provoquera dans cet enroulement l'apparition d'une tension induite variant sinusoïdalement si la vitesse de rotation est constante. Cette tension sinusoïdale pourra être captée aux balais 17.

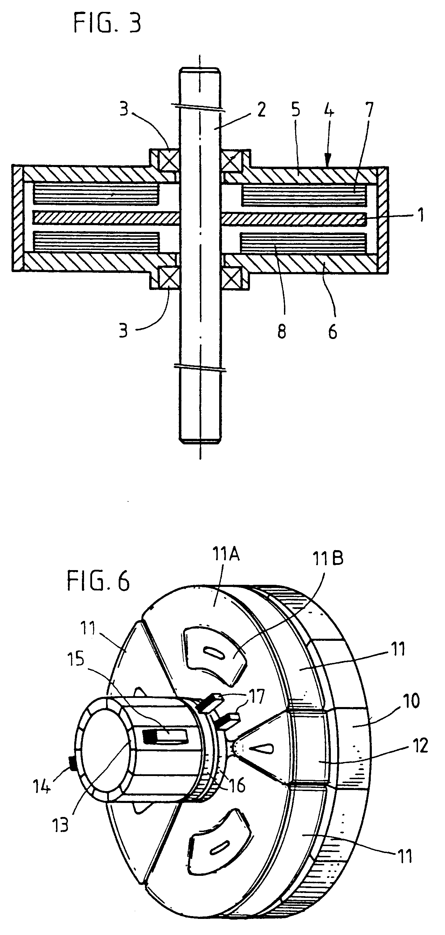

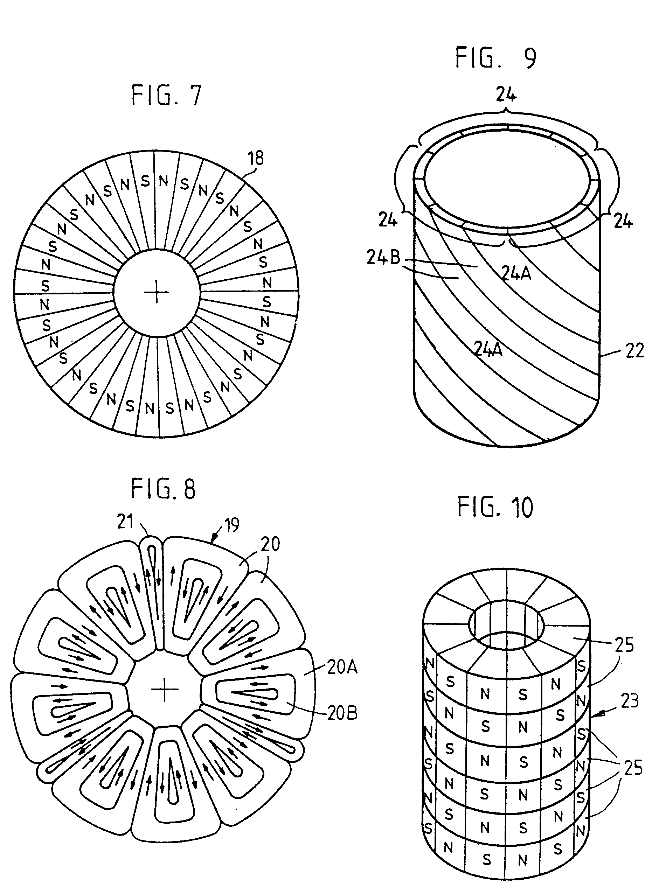

Les fig. 7 et 8 sont des vue analogues aux fig. 4 et 5 montrant une variante d'exécution du moteur de la fig. 6. Dans ce cas, le stator comporte 18 paires d'aimants dont les axes polaires sont parallèles à l'axe du cylindre et sont orientés dans les sens alternés. Devant ces 18 paires de pôles, le rotor 19 comporte un bobinage formé de neuf bobines 20 et de trois enroulements générateurs 21 intercalés chacun entre deux groupes successifs de trois bobines 20. De même, chaque bobine 20 est formée d'une partie extérieure 20a entourant une partie intérieure 20b selon la disposition des bobines 8, 9 et 11. Les enroulements 21 seront connectés en série et reliés à des bagues analogues aux bagues 16, tandis que les bobines 20 seront connectées en trois enroulements distincts comprenant chacun trois bobines 20. Les deux parties de chacune des bobines seront enclenchées et déclenchées en même temps, et le branchement des enroulements sur les lamelles du collecteur sera effectué de manière que trois phases soient excitées successivement. La première phase peut être constituée par les trois bobines 20 adjacentes dans un même sens de rotation aux bobines 21, la seconde phase étant constituée par les bobines 20 qui ne sont pas adjacentes à des bobines 21, tandis que la troisième est constituée par les bobines 20 qui sont adjacentes dans l'autre sens de rotation aux bobines 21. Le collecteur (non représenté) est construit de manière à assurer 108 commutations par tour.

Dans ce cas également, le branchement des parties 20a et 20 b des bobines de façon que les nappes de conducteurs actifs adjacentes soient parcourues par des courants allant en sens inverse remédiera aux effets de l'inductance propre des bobines en compensant au moins partiellement les effets de l'inductance propre par ceux de l'inductance mutuelle.

On a décrit jusqu'à maintenant des transducteurs électromécaniques dans lesquels les axes d'aimantation des aimants étaient parallèles à l'axe du rotor et la forme générale des bobines était une forme en secteur de cercle, chaque ensemble de bobines constituant une ou plusieurs couches planes parallèles au plan de l'ensemble d'aimants. Toutefois, l'agencement coaxial de parties de bobines dans lesquelles les effets de l'inductance propre sont compensé par ceux de l'inductance mutuelle, est également applicable au cas de transducteurs électromécaniques dans lesquels les axes de polarisation des aimants sont des axes radiaux et les enroulements des bobines s'étendent selon des portions de surfaces cylindriques. C'est ce que montrent schématiquement les fig. 9 et 10 dans lesquelles le corps 22 (fig. 9) représente schématiquement l'enroulement rotorique d'un moteur synchrone et le corps 23 représente un ensemble statorique formé d'aimants permanents. Le corps 22 comporte trois bobines 24 divisées en deux parties englobées l'une dans l'autre et l'on voit à la fig. 9 les nappes de conducteurs actifs 24a de la partie extérieure d'une des bobines 24, et les nappes de conducteurs actifs 24b de la partie intérieure de la même bobine 24. Les têtes de ces bobines ne sont pas représentées au dessin, mais on conçoit qu'elles peuvent être disposées et connectées de façon analogue à ce qui a été décrit jusqu'à maintenant. Comme le montre la fig. 9, les nappes de conducteurs actifs 24a et 24b sont disposées selon des lignes hélicoïdales sur une surface cylindrique qui dans la forme d'exécution représentée entoure le bloc statorique 23. Dans le cas ou les conducteurs actifs sont incurvés en hélices, comme le montre la fig. 9, il est évidemment nécessaire que les pôles magnétiques du bloc d'aimants 23 décrivent également des lignes hélicoïdales et ceci peut être obtenu comme on le voit à la fig. 10 en prenant une série de couronnes d'aimants 25 formées chacune par exemple de douze aimants dont les axes de polarisation sont disposés raidalement dans des directions alternées. Les pôles homologues sont décalés d'une couronne 25 à la suivante de façon à réaliser des lignes de pôles de même nom disposées en hélices.

Bien entendu, dans une forme d'exécution comme celle qui vient d'être décrite, où les axes de polarisation des aimants sont radiaux dans un ensemble d'aimants formant un corps cylindrique, les nappes de conducteurs actifs des bobines pourraient aussi être orientées selon les génératrices du cylindre. Dans ce cas, elles seraient rectilignes.

Enfin, l'agencement de bobines décrit peut aussi être utilisé dans d'autres types de transducteurs électromécaniques, par exemple dans des moteurs ou capteur linéraires.

En général, lorsqu'on forme des bobines en deux parties selon les exemples donnés ci-dessus, si les nappes de conducteurs actifs des deux parties sont de même largeur et si les deux parties sont coaxiales et coplanaires, les longueurs de fils des deux parties sont différentes. On peut toutefois pour éviter les effets d'une telle différence utiliser des diamètres de fils différents dans les deux parties de chaque bobine, ou réaliser d'autres agencements de bobinage.

**Revendications**

1. Transducteur électromécanique comportant une partie fixe (4) et une partie (1,2) mobile en rotation par rapport à la partie fixe autour d'un axe central, dont une desdites parties (1) comprend au moins un aimant et l'autre un ensemble de bobines (7,8) réparties autour dudit axe, caractérisé en ce que les bobines sont agencées en deux parties (9A, 9B) parcourues simultanément par le courant et comportant chacune deux nappes de conducteurs actifs coopérant avec les champs magnétiques, les deux parties de chaque bobine étant coaxiales et disposées de manière que lors d'une variation du courant les effets de l'inductance mutuelle dans les deux parties de la bobine soient inversés par rapport aux effets de l'inductance propre de chaque partie.

2. Transducteur selon la revendication 1, caractérisé en ce que les quatre nappes de conducteurs actifs de chaque bobine sont situées côte à côte et occupent des espaces égaux.

3. Transducteur selon la revendication 1 ou la revendication 2, caractérisé en ce que les bobines ne comportent pas de noyau.

4. Transducteur selon la revendication 2, caractérisé en ce que le ou les aimants sont incorporés à un corps circulaire (1, 10, 18), les axes polaires des aimants étant parallèles à l'axe du corps et en ce que les bobines (9, 11, 20) sont réparties en une ou plusieurs couches planes perpendiculaires audit axe.

5. Transducteur selon la revendication 4, caractérisé en ce qu'il comporte deux couches (7, 8) de bobines coaxiales décalées angulairement l'une par rapport à l'autre de la largeur d'une nappe de conducteurs actifs, en ce que l'ensemble de bobines est fixe, tandis que l'ensemble d'aimants constitue le rotor (1) du transducteur, ce dernier fonctionnant en moteur pas à pas, ou synchrone.

6. Transducteur selon la revendication 4, caractérisé en ce que le dit corps circulaire (10) est fixe, tandis que l'ensemble de bobines (11) constitue le rotor du transducteur, en ce que cet ensemble de bobines comporte une couche de bobines dans laquelle les bobines voisines sont alimentées par des impulsions déphasées et occupent chacune un secteur dont l'angle d'ouverture est inférieur à l'angle occupé par deux aimants voisins, le transducteur fonctionnant en moteur à collecteur ou en moteur synchrone.

7. Transducteur selon la revendication 6, caractérisé en ce que le rotor comporte en outre au moins un enroulement auxiliaire (12) capable de fonctionner en générateur de signal.

8. Transducteur selon la revendication 1, caractérisé en ce que l'ensemble d'aimants constitue un corps cylindrique (23) dans lequel les axes polaires des différents aimants sont orientés radialement et en ce que l'ensemble de bobines (24) est réparti selon une surface cylindrique coaxiale à l'ensemble d'aimants.

9. Transducteur selon la revendication 8, caractérisé en ce que les nappes de conducteurs actifs des bobines sont rectilignes et orientées selon des génératrices du cylindre.

10. Transducteur selon la revendication 8, caractérisé en ce que les nappes de conducteurs actifs (24A, 24B) des bobines (24) sont orientées selon des lignes hélicoïdales.

## Claims

1. Electromechanical transducer comprising a fixed part (4) and a part (1, 2) rotatable relative to the fixed part about a central axis, of which one of said parts (1) includes at least one magnet and the other an assembly of coils (7, 8) distributed about said axis, characterized in that the coils are arranged in two parts (9A, 9B) simultaneously traversed by the current and each comprising two laps of active conductors co-operating with the magnetic fields, the two parts of each coil being coaxial and disposed so that upon a variation of the current, the effects of the mutual inductance in the two parts of the coil are reversed relative to the effects of the self-inductance of each part.

2. Transducer according to claim 1, characterized in that the four laps of active conductors of each coil are situated side by side and occupy equal spaces.

3. Transducer according to claim 1 or claim 2, characterized in that the coils do not comprise any core.

4. Transducer according to claim 1, characterized in that the magnet or magnets are incorporated in a circular body (1, 10, 18), the polar axes of the magnets being parallel to the axis of the body, and in that the coils (9, 11, 20) are distributed in one or more plane layers perpendicular to said axis.

5. Transducer according to claim 4, characterized in that it comprises two coaxial layers (7, 8) of coils shifted angularly relative to one another by the width of a lap of active conductors, in that the coil assembly is fixed, whereas the magnet assembly constitutes the rotor (1) of the transducer, the latter operating as a stepping or synchronous motor.

6. Transducer according to claim 4, characterized in that the said circular body (10) is fixed, whereas the coil assembly (11) constitutes the rotor of the transducer, in that this coil assembly comprises a layer of coils in which the adjacent coils are fed by dephased pulses and each occupy a sector, the angle of aperture of which is less than the angle occupied by two adjacent magnets, the transducer operating as a collector motor or as a synchronous motor.

7. Transducer according to claim 6, characterized in that the rotor further comprises at least one auxiliary winding (12) capable of operating as a signal generator.

8. Transducer according to claim 1, characterized in that the magnet assembly constitutes a cylindrical body (23) in which the polar axes of the various magnets are oriented radially, and in that the coil assembly (24) is distributed along a cylindrical surface coaxial with the magnet assembly.

9. Transducer according to claim 8, characterized in that the laps of active conductors of the coils are rectilinear and oriented along generatrices of the cylinder.

10. Transducer according to claim 8, characterized in that the laps of active conductors (24A, 24B) of the coils (24) are oriented along helical lines.

## Patentansprüche

1. Elektromechanischer Umwandler mit einem feststehenden Teil (4) und einem gegenüber dem feststehenden Teil um eine zentrale Achse drehbaren beweglichen Teil (1, 2), wobei einer der genannten Teile (1) mindestens einen Magneten und der andere einen um die genannte Achse verteilten Spulensatz (7, 8) aufweist, dadurch gekennzeichnet, dass die Spulen in zwei Teilen (9A, 9B), die gleichzeitig vom Strom durchflossen werden, angeordnet sind, wobei jeder der Teile zwei mit den Magnetfeldern zusammenwirkende aktive Wicklungsschichten aufweist und wobei die beiden Teile von jeder Spule koaxial zueinander so angeordnet sind, dass bei einer Stromänderung die Wirkungen der Gegeninduktivität in den beiden Teilen der Spule inbezug auf die Wirkungen der Selbstinduktivität von jedem Teil umgekehrt sind.

2. Umwandler nach Anspruch 1, dadurch gekennzeichnet, dass die vier aktiven Wicklungsschichten von jeder Spule, gleiche Abstände besitzend, Seite an Seite angeordnet sind.

3. Umwandler nach Anspruch 1 oder 2, dadurch gekennzeichnet, dass die Spulen keinen Kern aufweisen.

4. Umwandler nach Anspruch 2, dadurch gekennzeichnet, dass der oder die Magnete in einem kreisförmigen Körper (1, 10, 18) eingeschlossen sind, dass die Axen der Magnetpole parallel zur Körperaxe sind und dass die Spulen (9, 11, 20) in eine oder mehrere rechtwinklig zur genannten Axe angeordnete ebene Lagen unterteilt sind.

5. Umwandler nach Anspruch 4, dadurch gekennzeichnet, dass er zwei Lagen (7, 8) von koaxial zueinander angeordneten Spulen umfasst, die zueinander um die Breite einer aktiven Wicklungsschicht winklig versetzt sind, und dass der Spulensatz feststehend ist, während alle Magnete den Rotor (1) des als Schrittmotor oder als Synchronmotor arbeitenden Umwandlers bilden.

6. Umwandler nach Anspruch 4, dadurch gekennzeichnet, dass der genannte kreisförmige Körper (10) feststehend ist, während der Spulensatz (11) den Rotor des als Kollektormotor oder als Synchronmotor arbeitenden Umwandlers bildet, und dass der Spulensatz eine Lage Spulen umfasst, in welcher benachbarte Spulen durch Impulse mit unterschiedlicher Phase gespeist sind, wobei jede Spule einen Sektor belegt, dessen Oeffnungswinkel kleiner als der von zwei benachbarten Magneten belegte Winkel ist.

7. Umwandler nach Anspruch 6, dadurch gekennzeichnet, dass der Rotor im weiteren mit mindestens einer zum Arbeiten als Signalgenerator vorgesehenen Hilfswicklung (12) versehen ist.

8. Umwandler nach Anspruch 1, dadurch gekennzeichnet, dass alle Magnete einen zylinderförmigen Körper (23) bilden in welchem die Polaxen der verschiedenen Magnete radial orientiert sind und dass der Spulensatz (24) auf eine zu den Magneten koaxiale zylindrische Oberfläche verteilt ist.

9. Umwandler nach Anspruch 8, dadurch gekennzeichnet, dass die aktiven Wicklungsschichten der Spulen geradlinig und nach den Mantellinien des Zylinders ausgerichtet sind.

10. Umwandler nach Anspruch 8, dadurch gekennzeichnet, dass die aktiven Wicklungsschichten (24A, 24B) der Spulen (24) nach schraubenförmig verlaufenden Linien ausgerichtet sind.

## FIG. 1

## FIG. 4

## FIG. 2

## FIG. 5

FIG. 3

FIG. 6

FIG. 7

FIG. 9

FIG. 8

FIG. 10